# EUROPEAN PATENT SPECIFICATION

(11) **EP 2 331 900 B1**
(45) Date of publication and mention of the grant of the patent: **17.08.2016**
(21) Application number: 09814847.1
(22) Date of filing: 16.09.2009
(51) Int. Cl.: F28D 7/10, C09C 1/50, F28D 7/00, F28F 1/12

(54) **CARBON BLACK PLANT**
RUSS KONFIGURIERTE ANLAGE
PLANTE DE PRODUCTION DE NOIR DE CARBONE

(30) Priority: 22.09.2008 SE 0802011
(43) Date of publication of application: 15.06.2011
(73) Proprietor: Aktiebolaget K.A. Ekström & Son, 291 25 Kristianstad (SE)
(72) Inventor: KÄRRBERG, Lennart, S-291 44 Kristianstad (SE)
(74) Representative: Karlsson, Leif Gunnar Börje
(86) International application number: PCT/SE2009/051029
(87) International publication number: WO 2010/033070

(56) References cited:
- EP-A2- 0 777 098
- WO-A1-98/54529
- DE-A1- 3 822 808
- JP-A- 2001 342 909
- JP-A- 2004 346 919
- US-A- 1 976 102
- US-A- 3 702 633
- US-A- 5 826 647
- US-A1- 2001 042 613
- US-A1- 2003 173 062

## Description

The present invention relates to a carbon black production plant comprising a combustion chamber and a tube heat exchanger according to the preamble of claim 1. Such a carbon black production plant is known from EP- 0 777 098A2.

### Background

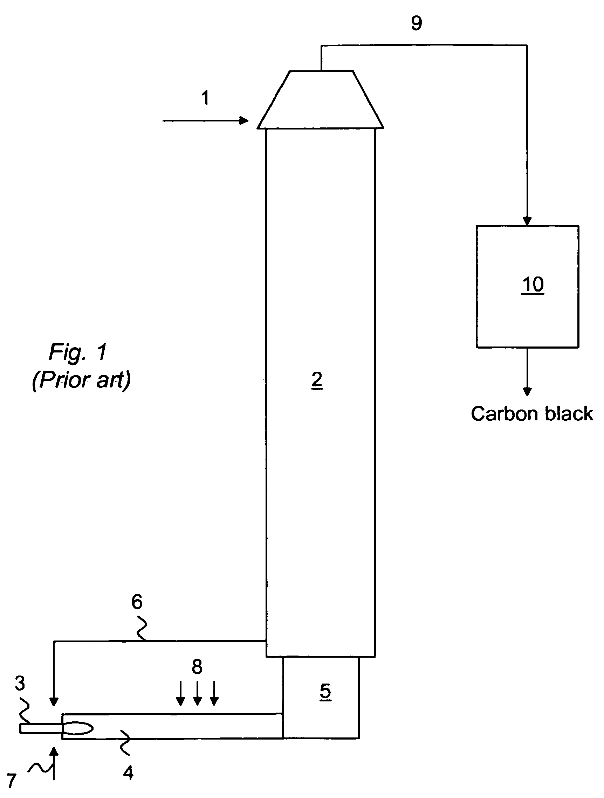

A schematic illustration of a conventional plant for the production of carbon black is shown in Figure 1. Combustion air is lead via a conduit 1 into the upper part of a tube heat exchanger 2, also known as an air pre-heater, in which it is preheated before the following combustion of oil in the burner 3 and the combustion chamber 4. The preheated air from the heat exchanger is lead into the combustion chamber via a conduit 6. Oil is added to the reactor via a conduit 7. In some cases, quench water 8 is added to the combustion chamber. The mixture of suspended carbon black in the consumed combustion air is lead into an evaporation chamber 5 and thereafter passed through the heat exchanger and led away from the top of the heat exchanger via a conduit 9 to a filter arrangement 10. In this filer arrangement 10 the carbon black is completely filtered off from the gas flow.

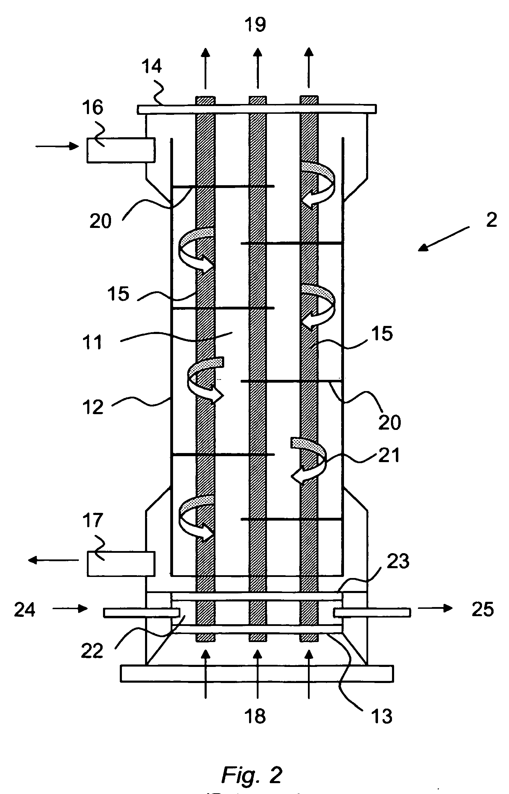

Figure 2 shows a simplified example of a conventional tube heat exchanger 2 used in a plant as shown in Figure 1. The heat exchanger 2 comprises a substantially cylindrical chamber 11 arranged vertically. The chamber 11 is enclosed by a substantially cylindrically shaped shell 12 and a lower end wall 23 and an upper end wall 14. The lower end wall 23 is also known as a tube plate. Tubes 15 are arranged inside the chamber. The tubes 15 are arranged substantially parallel to each other and extend through the entire chamber from the bottom end wall 23 to the upper end wall 14. Combustion air which is to be preheated is introduced via inlet 16 into the heat exchanger and exits via outlet 17 from which it is led to the combustion chamber.

The combusted oil, which is now a mixture of suspended carbon black in the consumed combustion air, is led from the bottom of the chamber (illustrated by arrows 18) inside the tubes to the top of the chamber and thereafter led via an exit (illustrated by arrows 19) to the filter arrangement.

The heat exchanger may also have horizontally arranged plates 20 extending from the shell 12 into the chamber 11. Such plates 20 force the air flowing through the chamber to take a longer part (illustrated by arrows 21) thereby increasing the time inside the chamber and thus the temperature of the exiting preheated air.

Most heat exchangers used today preheat the combustion air to approximately 800 °C. The high temperature of the flue gas causes high temperature loads on the tubes and on the shell of the heat exchanger, which in turn lead to substantial thermal expansion during use. The thermal expansion causes great thermal stresses on the tubes and the shell due to limited opportunities to expansion. Various solutions have been used to overcome this problem, such as for example the double shell type heat exchanger wherein the heat exchanger has a first inner shell and a second outer shell and the combustion air is introduced into the heat exchanger at its lower end between the outer and inner shell and lead between the shells up to the top of the heat exchanger and thereafter brought into contact with the tubes of the heat exchanger. Thereby, the temperature of the outer shell is reduced.

Moreover, various solutions for allowing the tubes to expand have been proposed. One example of such a solution is shown in US 6 334 482 wherein the tube plate is equipped with compensating devices to enable expansion of the tubes.

Furthermore, cooling of the bottom plate has been proposed. This is also shown in Figure 2, wherein the bottom end wall 23 defines an enclosed space 22 together with a lower bottom plate 13. Cooling air is introduced, as shown by arrow 24, into the space 22 and exits the space 22 through an outlet, as shown by arrow 25. Another example of cooling of the bottom plate is disclosed in US 6 334 483 wherein the plate includes upper and lower spar plates forming a spar space through which the tubes extend. The spar space is provided with internal channels adapted for a cooling medium.

US 5,826,647 discloses an alternative design of a heat exchanger for carbon black production, wherein the heat exchanger is configured as a double pipe header that is cooled by boiling water. The heat exchanger comprises a plurality of pipes which extend through the entire chamber. Each pipe is surrounded by a jacket, in the shape of a second pipe, whose inner circumference leaves spacing around the outer circumference of the pipe. The air to be preheated is lead through the chamber only inside said spacing. Additional heat transfer surfaces are provided in said spacing, intended to improve the heat transfer from the pipe to the air to be preheated. However, since the air to be preheated flows in a very limited space between the pipe and the jacket, the flow is very limited and the heat exchanger can thus only be used for preheating air up to 800 °C. Furthermore, the cooling of the double pipe header by boiling water requires a complicated design and poses a security risk if the pressure inside the double pipe header is built up during operation.

There is a wish of being able to increase the temperature of the preheated combustion air to up to about 900 °C in order to increase the efficiency of the process for the production of carbon black. Higher temperatures of the preheated air would lead to fuel cost savings, higher feed stock flow and higher carbon black production rate. Such an increase of the temperature poses however an even greater problem since the thermal expansion of the tubes will be increased. Moreover, in order to achieve sufficient heat transfer, it is considered that the length of the tubes has to be increased. Longer tubes will lead to higher heat exchangers and in some cases reduced mechanical stability of the heat exchanger.

WO 2006/074830 discloses a pre-heater for an apparatus for the production of carbon black, which is adapted to preheat air by heat exchange to a temperature of at least 800 °C. The pre-heater comprises an elongated jacket and a plurality of tubing arranged inside the jacket. In order to achieve sufficient mechanical stability of the jacket, the jacket is supported by suspension means. The jacket can expand upwards above the suspension means and downwards below the suspension means. Thereby, the jacket will be exposed to less compressive stress and therefore longer tubes can be used in the pre-heater thus enabling higher operating temperatures.

However, the solution provided in WO 2006/074830 requires that some type of external support for supporting the suspension means has to be built. This requires additional space for the plant.

The object of the present invention is to provide a tube heat exchanger adapted for the production of carbon black, in which the combustion air can be preheated to temperatures above 800 °C and which overcomes the drawbacks with previously known tube heat exchangers used for the production of carbon black.

### Summary

The object is achieved by means of the tube heat exchanger adapted for the production of carbon black as defined by claim 1. Embodiments of the invention are defined by the dependent claims.

The tube heat exchanger in accordance with the present invention comprises a substantially vertically arranged substantially cylindrical chamber enclosed by a substantially cylindrically shaped shell, a lower end wall and an upper end wall, vertically arranged tubes which extend through the entire chamber from the bottom end wall to the upper end wall, an inlet and an outlet for gas, i.e. combustion air to be preheated, to flow inside the chamber on the outside of the tubes. The tubes in the heat exchanger are at least partly provided with external fins. The fins increase the surface area of the tubes and thereby increase the heat transfer from the tubes to the combustion air, which is to be preheated.

The tubes are single-walled and the outside surface of the tubes faces the inside of the substantially cylindrical chamber.

The tubes provided with fins enables an improved heat transfer and thereby enables preheating of the combustion air to well above the 800 °C that conventional heat exchangers preheat the combustion air to. In fact, it is possible to preheat the combustion air to at least 900 °C when the tubes are provided with fins in accordance with the present invention. A higher temperature of the preheated combustion air leads to fuel cost savings, higher feed stock flow and higher carbon black production rate.

Moreover, since the surface of the tubes is increased by means of the fins provided on the outer surface of the tubes, it is not necessary to increase the length of the tubes, which has previously been considered necessary. Thereby, the thermal expansion can be kept at a minimum and the mechanical stability of the heat exchanger is maintained.

According to a preferred embodiment, the tubes are provided with external fins at least in the lower part of the tubes since the temperature of the gas flowing inside the tubes, and therefore also the temperature of the tubes, is highest in this part. The fins would thus have the best effect in this part of the tubes.

Preferably, at least 20% of the length of each tube is provided with fins in order to accomplish the desired heat transfer from the tubes to the combustion air to be preheated.

According to another preferred embodiment, the fins are helically provided around the outer surface of the tubes with a predetermined pitch. The pitch may be constant or varying. For example, the pitch may be smaller at the lower part of the tubes, where the temperature is highest and the surface of the tubes should be as large as possible, and bigger higher up along the tubes.

The fins may preferably extend substantially horizontally from the outer surface of the tubes into the chamber. However, it is also possible that the fins have a substantially vertical extension along the side of the tubes.

The fins may preferably be extending from the surface of a solid tube with constant outer diameter, i.e. the tube is at least partly a so called high-finned tube. Alternatively, the fins may be provided by machining the outer surface of a solid tube to form a groove on the outer surface such that fins are formed, whereby the outer parts of the fins are defined by the initial outer surface of the tubes and the lower parts of the fins are defined by the bottom of the groove, i.e. the tube is at least partly a so called low-finned tube.

The tube heat exchanger may be of a single shell design or of a double shell design. A double shell design reduces the stress of the outer shell of the heat exchanger and thus enables even higher temperatures of the preheated air.

A carbon production plant comprising a combustion chamber and the tube heat exchanger in accordance with the present invention enables higher temperatures of the combustion air introduced into the combustion chamber, since the combustion air may be preheated to higher temperatures in the tube heat exchanger, as previously described. The carbon black production process will thus be more efficient as the higher temperature of the combustion air improves the combustion. This will in turn lead to fuel cost savings, an improved feed stock flow and higher carbon black production rate.

### Brief description of the drawings

- Figure 1: shows schematically a conventional plant for the production of carbon black.
- Figure 2: shows a simplified cross sectional view of a tube heat exchanger in accordance with prior art.
- Figure 3: shows a side view, which is partly cross sectional, of tube heat exchanger in accordance with the invention.
- Figure 4: shows a cross sectional view of a part of a tube provided with fins in accordance one embodiment of the invention.
- Figure 5: shows a side view of a part of a tube provided with fins in accordance with one embodiment of the invention wherein the fins are helically wound around the outer surface of the tube.
- Figure 6: shows a cross sectional view of a part of a tube provided with fins according to an alternative embodiment of the invention.

### Detailed description

The invention will now be described with reference to the accompanying drawings. The drawings have in some cases been simplified and some features are exaggerated in order to clearly illustrate the invention. Hence, the figures shall not be considered drawn to scale.

As previously discussed, Figure 1 illustrates schematically a conventional plant for the production of carbon black and Figure 2 illustrates a simplified side view of a previously known tube heat exchanger 2.

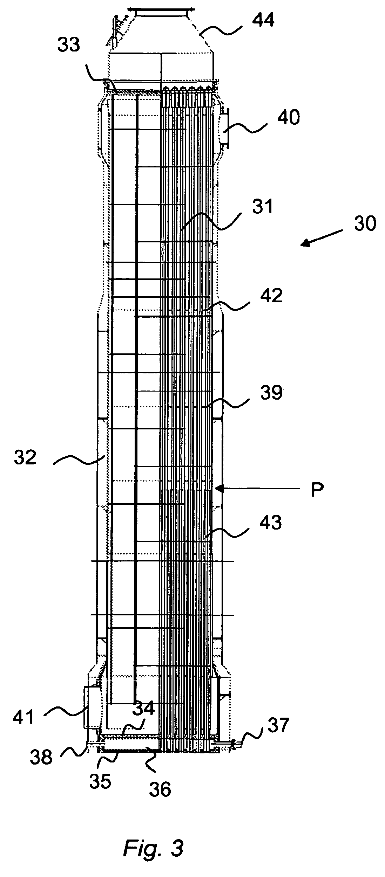

Figure 3 illustrates a tube heat exchanger 30 in accordance with one embodiment of the invention. The heat exchanger 30 comprises a substantially vertically arranged substantially cylindrical chamber 31 enclosed by a substantially cylindrically shaped shell 32, an upper end wall 33 and a lower end wall 34. The lower end wall 34 is in this case an upper bottom plate. The heat exchanger also comprises a lower bottom plate 35. The upper and lower bottom plates enclose a space 36 into which cooling fluid, such as cooling air, is lead via a cooling fluid inlet 37. The cooling fluid exits the space 36 via a cooling fluid outlet 38.

The heat exchanger further comprises a plurality of tubes 39 arranged substantially vertically and substantially parallel to each other. The tubes 39 are single-walled and are arranged such that the outside surface of the tubes directly faces the inside of the substantially cylindrical chamber. The tubes extend through the entire chamber 31 from the lower bottom plate 35 to the upper end wall 33. Gas from the combustion chamber, comprising suspended carbon black in the combusted air, is introduced into the tubes via an inlet (not shown) and flows through the tubes 39 from the bottom of the tubes to the top of the tubes and exits the heat exchanger via an outlet (not shown) in the top cone 44. The gas from the combustion chamber may typically have a temperature of about 1000 °C or higher when it enters the tubes 39.

An inlet 40 for combustion air to be preheated is provided at the top of the chamber 31 and an outlet 41 for preheated combustion air is provided at the bottom of the chamber 31. The combustion air flows inside the chamber 31 on the outside of the tubes 39. It should be noted that, in contrary to the heat exchanger disclosed in US 5,826,647, the heat exchanger in accordance with the present invention allows the combustion air to be preheated to flow inside the entire chamber 31. Therefore, the flow of combustion air to be preheated is not limited to a small space and the heat exchange can be significantly increased, thus enabling a higher end temperature of the preheated air.

The heat exchanger may also preferably comprise horizontally arranged plates 42, extending from the shell into the chamber such that the air to be preheated has to take a longer path inside the chamber, thereby increasing the temperature of the exiting preheated combustion air.

The tubes 39 are provided with external fins in the lower part 43 of the tubes up to a point P. The fins increase the heat transferring surface of the tubes and thus improve the heat transfer from the combusted gas inside the tubes, through the tubes, to the combustion air flowing outside the tubes. The fins are located only in the lower part of the tubes since the temperature is highest in this part of the tubes. For a heat exchanger of a height of typically about 14 meters, about 4-5 meters of the tubes could suitably be provided with fins.

It should however be noted that the tubes may have fins along their entire extension inside the chamber or on parts of the tubes only, such parts being located anywhere along the extension of the tubes.

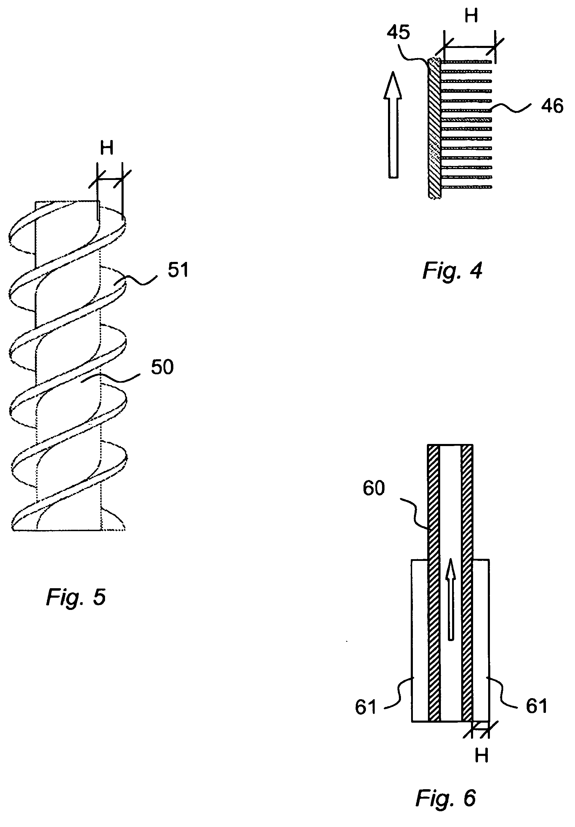

The fins preferably extend from the outer surface of the tube substantially horizontally. Figure 4 illustrates a side view of a wall 45 of a tube wherein gas flows (illustrated by the arrow). Fins 46 extend form the outer surface of the tube wall 45 essentially horizontally.

According to one embodiment of the invention, the fins may be helically arranged around the tube with a predetermined constant or non-constant pitch. In the case of a non-constant pitch, the pitch may for example be smaller at the lower part of the tubes, where the temperature is highest and the surface of the tubes should be as large as possible, and bigger higher up along the tubes.

Figure 5 shows a side view of a part of a tube 50 provided with fins 51. The fins are helically wound around the outer surface of the tube 50. They extend substantially horizontally from the surface of the tube 50 into the chamber. The fins illustrated in Figure 5 have a constant pitch.

According to an alternative embodiment, the fins may extend essentially vertically along the tube, either straight or in a helical shape with a predetermined pitch. Figure 6 illustrates a cross sectional view of a part of a tube 60 in which the combusted gas flows (as illustrated by the arrow). The tube is provided with external fins 61 extending vertically and in a straight manner, i.e. not being helically wound along the length of the tube

The fins are provided on the outer surface of the tubes, i.e. are external fins. They are directly provided on the outer surface of the tubes, thereby increasing the outer surface of the tubes. The fins are preferably made of the same material as the tubes in order to have the same thermal expansion and thus minimizing the risk of crack formation resulting from thermal stresses.

The fins extend from the surface of the tubes into the chamber. Such an extension may preferably be horizontal as previously shown in Figures 4 and 5. However, the fins may also be vertically arranged as shown in Figure 6. The fins may in both cases be helically wound around the surface of the tubes.

The fins have such a height H (shown in Figures 4-6) that they do not come into contact with the fins of an adjacent tube. The height of the fins may preferably be in the range of 0,5-20 mm. In the case of high finned tubes, the fins may preferably be 2-20 mm high, more preferably 3-10 mm. In the case of low finned tubes, the fins are maximally 4 mm. The height of the fins is the distance from the tube surface to the outer part of the fins placed in the chamber.

It should be noted that even though the invention has been illustrated in figure 3 in the form of a single shell designed heat exchanger, it is also possible that the heat exchanger may be of double shell type. In such a case, the heat exchanger comprises an inner shell and an outer shell. The inlet for combustion air is preferably arranged in the lower part of the heat exchanger and introduces the combustion air in a space between the outer and inner shell. The combustion air then flows from the lower part of the heat exchanger between the outer and inner shells up to the top where it enters the chamber and comes into contact with the tubes.

The tubes with the fins may be so called high finned tubes wherein the fins are provided on the outside of the tubes, suitably by welding. However, it is also possible that the tubes with the fins are so called low finned tubes wherein the fins are provided by means of machining a part of the outer surface of the tubes to mechanically remove a part thereof by forming a groove. Alternatively, low finned tubes may be produced directly by means of extrusion. In case of low finned tubes, the fins generally have a smaller extension (height) than in the case of high finned tubes since the initial tube wall thickness limits the possible design.

The heat exchanger according to the present invention may also be provided with thermal expansion compensating devices and/or cooling of the bottom plate in accordance with previously known techniques. Moreover, in order to reduce the temperature load of the shell, the shell may be provided with isolation on the inner part of the shell (i.e. the surface faced towards the chamber), especially in the lower part of the shell where the temperature is highest.

## Claims

1. A carbon black production plant comprising a combustion chamber and a tube heat exchanger (30), said tube heat exchanger comprising a substantially vertically arranged substantially cylindrical chamber (31) enclosed by a substantially cylindrically shaped shell (32), further comprising horizontally arranged plates (42) extending from the shell (32) into the chambers wherein said horizontal plates are arranged such that the air to be preheated has to take longer path inside the chamber, a lower end wall (34) constituting an upper bottom plate, an upper end wall (33), a lower bottom plate (35), the said upper and lower plates enclose a space (36) into which cooling fluid is lead via cooling fluid inlet (37), the said cooling fluid exits the space (36) via a cooling fluid outlet (38), vertically arranged tubes (39) which extend through the entire chamber (31) from the bottom end wall to the upper end wall, an inlet and an outlet for gas to flow inside the chamber (31) on the outside of the tubes (39), **characterized in that** the tubes (39) are at least partly provided with external fins which extend from the surface of the tubes (39) into the chamber (31), wherein the tubes (39) are provided with external fins only in a lower part (43) of the tubes.

2. Carbon black production plant according to claim 1 **characterized in that** at least 20 % of the length of each tube is provided with fins.

3. Carbon black production plant according to any of the preceding claims **characterized in that** the fins are helically wound around the outer side of the tubes.

4. Carbon black production plant according to any of the preceding claims **characterized in that** the fins extend essentially horizontally from the outer surface of the tubes.

5. Carbon black production plant according to any of claims 1 - 3 **characterized in that** the fins extend essentially vertically along the outer surface of the tubes.

6. Carbon black production plant according to any of the preceding claims **characterized in that** the tubes are high finned tubes, extending from the surface of a solid tube with a constant diameter, at least a part of the length of the tubes.

7. Carbon black production plant according to any of claims 1 -5 **characterized in that** the tubes are low finned tubes, whereby the outer parts of the fins are defined by the initial outer surface of the tubes and the lower parts of the fins are defined by the bottom of the groove, at least a part of the length of the tubes.

8. Carbon black production plant according to any of the preceding claims **characterized in that** the tubes (39) are single-walled and arranged such that the outer surfaces of the tubes (39) directly face the inside of the chamber (31).

9. Carbon black production plant according to any of the preceding claims **characterized in that** it has a single shell design.

10. Carbon black production plant according to any of the preceding claims **characterized in that** it has a double shell design.

11. Use of a carbon black production plant according to any one of claims 1-10, wherein gas from the combustion chamber entering the tubes (39) has a temperature of about 1000 °C or higher, and wherein preheated combustion air exiting the heat exchanger has a temperature of more than 800 °C, preferably at least 900 °C.

## Patentansprüche

1. Ruß-Produktionsanlage, umfassend eine Brennkammer und einen Rohrwärmetauscher (30), wobei der Rohrwärmetauscher eine im Wesentlichen vertikal angeordnete im Wesentlichen zylindrische Kammer (31) umfasst, die von einer im Wesentlichen zylindrisch geformten Schale (32) umgeben wird, die horizontal angeordnete Platten (42) umfasst, die sich von der Schale (32) in die Kammern erstrecken, wobei die horizontalen Platten so angeordnet sind, dass die vorzuwärmende Luft einen längeren Weg innerhalb der Kammer zurücklegen muss, eine untere Endwand (34), die eine obere Bodenplatte bildet, eine obere Endwand (33), eine untere Bodenplatte (35), wobei die obere und untere Platte einen Raum (36) umgeben, in den Kühlfluid über einen Kühlfluideinlass (37) eingeleitet wird, wobei das Kühlfluid den Raum (36) über einen Kühlfluidauslass (38) verlässt, vertikal angeordnete Rohre (39), die sich durch die gesamte Kammer (31) von der unteren Endwand zu der oberen Endwand erstrecken, einen Einlass und einen Auslass für Gas, das in der Kammer (31) auf der Außenseite der Rohre (39) strömen soll, **dadurch gekennzeichnet, dass** die Rohre (39) mindestens teilweise mit externen Rippen bereitgestellt sind, die sich von der Oberfläche der Rohre (39) in die Kammer (31) erstrecken, wobei die Rohre (39) mit externen Rippen nur in einem unteren Teil (43) der Rohre bereitgestellt sind.

2. Ruß-Produktionsanlage nach Anspruch 1, **dadurch gekennzeichnet, dass** mindestens 20% der Länge jedes Rohres mit Rippen bereitgestellt ist.

3. Ruß-Produktionsanlage nach einem der vorhergehenden Ansprüche, **dadurch gekennzeichnet, dass** die Rippen spiralförmig um die Außenseite der Rohre gewickelt sind.

4. Ruß-Produktionsanlage nach einem der vorhergehenden Ansprüche, **dadurch gekennzeichnet, dass** sich die Rippen im Wesentlichen horizontal von der Außenseite der Rohre erstrecken.

5. Ruß-Produktionsanlage nach einem der Ansprüche 1 bis 3, **dadurch gekennzeichnet, dass** sich die Rippen im Wesentlichen vertikal entlang der Außenseite der Rohre erstrecken.

6. Ruß-Produktionsanlage nach einem der vorhergehenden Ansprüche, **dadurch gekennzeichnet, dass** die Rohre hohe Rippenrohre sind, die sich von der Oberfläche eines festen Rohrs mit einem konstanten Durchmesser erstrecken, zumindest über einen Teil der Länge der Rohre.

7. Ruß-Produktionsanlage nach einem der Ansprüche 1 bis 5, **dadurch gekennzeichnet, dass** die Rohre niedrige Rippenrohre sind, wodurch die äußeren Teile der Rippen von der anfänglich äußeren Oberfläche der Rohre definiert werden und die unteren Teile der Rippen durch die Unterseite der Rille definiert werden, zumindest über einen Teil der Länge der Rohre.

8. Ruß-Produktionsanlage nach einem der vorhergehenden Ansprüche, **dadurch gekennzeichnet, dass** die Rohre (39) einwandig und derart angeordnet sind, dass die äußeren Oberflächen der Rohre (39) direkt zur Innenseite der Kammer (31) weisen.

9. Ruß-Produktionsanlage nach einem der vorhergehenden Ansprüche, **dadurch gekennzeichnet, dass** sie eine einschalig ausgestaltet ist.

10. Ruß-Produktionsanlage nach einem der vorhergehenden Ansprüche, **dadurch gekennzeichnet, dass** sie eine doppelschalig ausgestaltet ist.

11. Verwendung eines Ruß-Produktionsanlage nach einem der Ansprüche 1 bis 10, wobei Gas aus der Brennkammer, das in die Rohre (39) eintritt, eine Temperatur von etwa 1000°C oder höher aufweist, und wobei die vorgewärmte Verbrennungsluft, die aus dem Wärmetauscher austritt, eine Temperatur von mehr als 800°C aufweist, vorzugsweise mindestens 900°C.

## Revendications

1. Installation de production de noir de carbone comprenant une chambre de combustion et un échangeur de chaleur à tubes (30), ledit échangeur de chaleur à tubes comprenant un chambre essentiellement cylindrique agencée sensiblement verticalement (31) délimitée par une coquille de forme sensiblement cylindrique (32), comprenant en outre des plaques agencées horizontalement (42) s'étendant à partir de la coquille (32) dans les chambres, dans laquelle lesdites plaques horizontales sont agencées de telle sorte que l'air à préchauffer doive emprunter un chemin plus long à l'intérieur de la chambre, une paroi d'extrémité inférieure (34) constituant une plaque de fond supérieure, une paroi d'extrémité supérieure (33), une plaque de fond inférieure (35), lesdites plaques supérieure et inférieure délimitant un espace (36) dans lequel un fluide de refroidissement est introduit par l'intermédiaire d'une entrée de fluide de refroidissement (37), ledit fluide de refroidissement sortant de l'espace (36) par l'intermédiaire d'une sortie de fluide de refroidissement (38), des tubes agencés verticalement (39) s'étendant à travers la totalité de la chambre (31) à partir de la paroi d'extrémité inférieure jusqu'à la paroi d'extrémité supérieure, une entrée et une sortie pour qu'un gaz puisse s'écouler à l'intérieur de la chambre (31) sur le côté extérieur des tubes (39), **caractérisée en ce que** les tubes (39) sont au moins partiellement pourvus d'ailettes externes qui s'étendent à partir de la surface des tubes (39) dans la chambre (31), dans laquelle les tubes (39) sont pourvus d'ailettes externes uniquement dans une partie inférieure (43) des tubes.

2. Installation de production de noir de carbone selon la revendication 1, **caractérisée en ce qu'**au moins 20 % de la longueur de chaque tube comporte des ailettes.

3. Installation de production de noir de carbone selon l'une quelconque des revendications précédentes, **caractérisée en ce que** les ailettes sont enroulées de façon hélicoïdale autour du côté extérieur des tubes.

4. Installation de production de noir de carbone selon l'une quelconque des revendications précédentes, **caractérisée en ce que** les ailettes s'étendent essentiellement horizontalement à partir de la surface extérieur des tubes.

5. Installation de production de noir de carbone selon l'une quelconque des revendications 1 à 3, **caractérisée en ce que** les ailettes s'étendent essentiellement verticalement le long de la surface extérieure des tubes.

6. Installation de production de noir de carbone selon l'une quelconque des revendications précédentes, **caractérisée en ce que** les tubes sont des tubes hauts à ailettes, qui s'étendent à partir de la surface d'un tube massif avec un diamètre constant, sur au moins une partie de la longueur des tubes.

7. Installation de production de noir de carbone selon l'une quelconque des revendications 1 à 5, **caractérisée en ce que** les tubes sont des tubes bas à ailettes, où les parties extérieures des ailettes sont définies par la surface extérieure initiale des tubes et les parties inférieures des ailettes sont définies par le fond de la rainure, sur au moins une partie de la longueur des tubes.

8. Installation de production de noir de carbone selon l'une quelconque des revendications précédentes, **caractérisée en ce que** les tubes (39) sont à paroi simple et sont agencés de telle sorte que les surfaces extérieures des tubes (39) se trouvent directement en face du côté intérieur de la chambre (31).

9. Installation de production de noir de carbone selon l'une quelconque des revendications précédentes, **caractérisée en ce qu'**elle présente une conception à coquille simple.

10. Installation de production de noir de carbone selon l'une quelconque des revendications précédentes, **caractérisée en ce qu'**elle présente une conception à coquille double.

11. Utilisation d'une installation de production de noir de carbone selon l'une quelconque des revendications 1 à 10, dans laquelle un gaz provenant de la chambre de combustion qui entre dans les tubes (39) affiche une température d'environ 1000°C, ou plus, et dans laquelle de l'air de combustion préchauffé sortant de l'échangeur de chaleur affiche une température supérieure à 800°C, de préférence d'au moins 900°C.
